# EUROPEAN PATENT APPLICATION

(11) **EP 0 801 038 A2**
(43) Date of publication of application: **15.10.1997**
(21) Application number: 97105935.7
(22) Date of filing: 10.04.1997
(51) Int. Cl.: C03B 37/04, C03B 37/075, D01D 5/18, D01F 8/18

(54) **Mineral wool products and method and device for producing them**

(30) Priority: 12.04.1996 DE 19614571
(71) Applicant: ISOVER SAINT-GOBAIN, 92400 Courbevoie (FR)
(72) Inventor: Bernard, Jean-Luc, 60600 Clermont (FR); Berthier, Guy, 60600 Clermont (FR)
(74) Representative: KUHNEN, WACKER & PARTNER

(57) **Abstract**

The present invention proposes a method for producing mineral wool products by using a spinner (202), through the orifices (206 and 208) of which at least two supplied molten mineral materials (210 and 212) are centrifuged, with each one of said two molten mineral materials being centrifuged at least partly through orifices (206 and 208) which are separate and assigned to a respective one of the two molten materials in order to produce pure fibers (220 and 222) from the molten materials. The present invention furthermore furnishes a device for centrifuging molten materials (210 and 212) for producing mineral fiber products by means of a spinner (202) having a multiplicity of orifices (206 and 208) provided in its peripheral wall (204) for centrifuging molten materials (210 and 212) supplied to the spinner (202), with the spinner (202) comprising on the inside (214) of its peripheral wall (204) compartments (216 and 218) arranged in sections for separately supplying - or separately receiving, respectively - a respective one of the two molten materials to at least one associated orifice.

## Description

The present invention concerns a method for producing mineral wool products of mineral fibers in accordance with the preamble of claim 1 or 2, respectively, a device for fiberising molten mineral materials to produce mineral fiber products in accordance with the preamble of claim 9 or 10, respectively, as well as a mineral wool product in accordance with claim 16 or 19, respectively.

Conventional methods and devices have hitherto been used to obtain mineral wool products consisting of mineral fibers from a single molten material (cf. U.S.-A-4,203,774 or U.S.-A-4,203,748). In accordance with the so-called TEL technique, i.e. the internal rotary process with attenuating blast, this single molten mineral material is supplied to the spinner of a fiberising unit comprising in its peripheral wall a multiplicity of orifices, and centrifuged. In such fiberising units, the centrifuged molten material is, as a general rule, subjected to the supplementary attenuating effect of a gas flow usually generated by an annular burner such as disclosed e.g. in WO 93/02977.

Even though the mineral fibers produced by the described methods and the mineral wool products obtained thereby already have good thermal insulation properties, such usual methods and devices are not suited for producing fibers from two different molten materials.

A method and a device for producing bicomponent fibers are already known from U.S.-A-2,998,620. The method used is the TEL technique, however two molten mineral materials of different compositions and different coefficients of thermal expansion are fed to the spinner. Streams of either molten material flow through a common port to thus enter into surface contact with each other. The dual stream of molten material thus produced is centrifuged into a single filament and subsequently subjected to the attenuating effect of a gas flow. Thereby a bicomponent fiber is obtained from two different molten mineral materials whose different coefficients of thermal expansion result in a curling effect upon cooling, such that this bicomponent fiber has the general but irregular shape of a helically wound thread following solidification.

Another device and method, respectively, is known from WO 95/12700. The spinner described there comprises compartments arranged in sections on the inside of the peripheral wall for separate channelling of the two molten materials, with two adjacent compartments, which are separated by a baffle and contain different molten materials, being associated with a common orifice having a slit-shaped configuration and located in the boundary area of these two compartments, wherethrough the two different molten materials can also be brought into surface contact and centrifuged. A similar device is moreover known from WO 95/29881 wherein the orifices have a "Y" or "V" configuration, respectively. By such devices bicomponent fibers can also be produced from two laterally adjacent layers of different molten materials. These bicomponent fibers also have a curled configuration following attenuation and cooling.

Producing such bicomponent fibers from two different molten materials by means of the described methods or by means of the hitherto known devices is still extremely expensive because of the high production costs for suitable fiberising units, as a result e.g. of complex orifice geometry, complicated channelling of the molten materials, and the associated expensive construction of the spinner. The throughput of molten material and thus the productivity of these fiberising units is furthermore low. As a consequence, the output of finished mineral wool products obtainable by such an installation is small, with its operation being comparatively costly.

Owing to the irregular curling of such bicomponent fibers, improved homogeneity of the fiber distribution and of the empty spaces defined between them can be obtained. The thermal and mechanical properties achieved thereby can, however, be influenced only to a very limited extent - if at all - to adapt them to the requirements of a specific instance.

The present invention therefore has the object of proposing a method and furnishing a device whereby a mineral wool product can be produced which is constituted by fibers made up of at least two molten materials, the thermal and mechanical properties of which can be controlled to comply with specific requirements, and which may be suited in a given case to achieve a distinct increase of productivity.

This object is attained by the characterising features of claim 1.

In accordance with the method of the invention, at least partly separate centrifuging of the two molten materials supplied into the spinner is proposed. This opens up a variety of advantages.

Optimisation of the thermal properties, for example in order to improve the insulating properties of the finished mineral wool product, can be achieved through suitable choice of the first molten mineral material, while optimisation of the mechanical properties, for example in order to increase stability, can be achieved through corresponding choice of the second molten mineral material. This eliminates the problem of having to find a single molten material from which fibers having optimum properties in any regard might be produced. One of the two molten materials may, for example, be colored whereby the mineral wool product obtained from the fibers can be given any desired coloring. The one molten material may furthermore be optimised under the aspect of resistance against chemical influences, whereas the molten material of the second fiber may be chosen under other aspects. Also, one material may be selected to optimise certain thermal or physical properties like high radiation resistance, low ageing etc. whereas the other material may be selected e.g. for low price.

Process management is substantially facilitated in the method of the invention inasmuch as complicated orifice configurations in the spinner can be omitted. Instead of bringing the two molten materials into surface contact via converging orifices having a common outlet and then centrifuging them as is proposed in the prior art, each molten material is at least partly attenuated into a pure monocomposition fiber by itself in the proposed method. Such a simplified process management helps lower production costs. Moreover a multiplicity of orifices can be provided in the spinner to thus design the sum of orifice cross-sections to be relatively large in order to achieve high productivity by the method of the invention.

Moreover, the combination of two pure fiber types homogeneously distributed in a mineral wool product also results in good homogeneity of the distribution of empty spaces present between the fibers, for the fibers produced from different molten materials exhibit different types of mechanical behavior upon deposition.

Within the framework of the present invention, a 'pure fiber' or 'monocomposition fiber' is meant to signify an individual fiber produced from the material of a single molten material. Bicomponent or multi-component fibers correspondingly should be understood to be fibers composed of at least two molten materials, e.g. comprising laterally contacting layers of the two molten materials.

In order to enable further optimisation of the thermal, mechanical or chemical properties of the mineral wool product and furthermore improve homogeneity of the distribution of fibers and of intermediate empty spaces without forgoing the above advantages, it is proposed in accordance with claim 2 to provide for the production of compound fibers or composite fibers made up of single fibers or monocomposition fibers of both molten materials.

For this purpose, the orifices for the first molten material must be arranged in such close proximity of the orifices for the second molten material that initially, upon emerging from the orifices, pure fibers each made up of a respective one of the molten materials are produced. When these two adjacent pure fibers made up of different molten materials are attenuated, they combine by contact at a plurality or multiplicity of points of contact, whereby the desired compound fiber is achieved.

Such a compound fiber may, for example, be pictured to resemble a rope ladder comprising links which are reduced to points of contact. The produced compound fiber also twists during cooling and solidification due to the different coefficients of thermal expansion of the two molten mineral materials, whereby a compound fiber is formed which is curled, i.e. whose hypothetical general shape is helical. Such a curled compound fiber moreover advantageously possesses thermal and mechanical properties separately optimised for each single fiber. The process management for its production can be kept simple and thus economic, whereby a cost advantage may be achieved besides improved mechanical and thermal properties of the ultimately produced mineral wool product.

The composite fibers may more generally be described to have an irregular configuration in the direction of extension, i.e. they are formed to strongly deviate from the linear shape in the direction of their axial extension. The composite fibers moreover present multiple reversals of the turning direction along their extension.

The compound fiber *per se* offers further advantages in comparison with the bicomponent fiber.

If mechanical tensions arise in the single fibers or monocomposition fibers during solidification of the fibers, free mobility between two points allows their compensation without danger of fiber breakage. In contrast, there is the risk in the bicomponent fiber that the forcible deformation of the total fiber during solidification, resulting in the helical or curled shape, produces such small radii of curvature that the tensile stresses in the layer of one molten material of the bicomponent fiber increase to the point where this layer breaks in sections and separates from the fiber. The thermal and mechanical properties of the fiber are thereby impaired, without such cracks being readily noticeable in the bicomponent fiber following its production. The compound fiber attainable by the method of the invention thus furthermore offers the advantage of the risk of fiber breakage already being inherently reduced through its production.

Between two points of contact, the monocomposition fibers are at a distance from each other and thereby form first lines defining an empty space. As a consequence, the compound fiber itself already predefines good homogeneity of the distribution of fibers and of empty spaces. As such a compound fiber curls even more strongly during solidification, more lines defining additional empty spaces are created to thereby further improve homogeneity of distribution.

Depending on requirement and demands to its properties, a mineral wool product produced by the method of the invention can, in accordance with claim 2 in its independent wording, comprise any desired mixture of pure fibers and composite fibers ranging from a hundred per cent proportion of at least two pure fiber types to a hundred per cent proportion of composite fibers. Thus any desired combination of the advantages outlined above while retaining a relatively high productivity - which depends on the amount of the pure fiber proportion - is made possible.

In accordance with claim 3 it is furthermore proposed in the method of the invention to also produce bicomponent fibers at least in part, whereby mineral wool products can be obtained wherein e.g. the proportion of pure fibers made up of two molten materials as well as the proportion of bi-component fibers can be chosen freely and a proportion of composite fibers can also be provided according to necessity. Mineral wool products including any desired proportion of bicomponent fibers and composite fibers can also be produced. As a consequence, the method of the invention opens up a wide field of possible combinations and/or mixtures of pure monocomposition fibers, composite fibers and bicomponent fibers, thereby making it possible to achieve optimum mineral wool products for the respective applications of interest.

This is advantageously achieved by producing, as proposed in claim 4, pure fibers made up of the respective molten materials, composite fibers constituted by monocomposition fibers which are made up of both molten materials, or bicomponent fibers made up of layers of both molten materials in predetermined portions of the spinner peripheral wall. The most distinct productivity increase is achieved by means of those portions where pure fibers are produced.

It is furthermore proposed in the method of the invention in accordance with claim 5 to produce fibers having different diameters. This creates a wider range of options in selecting or emphasising properties of the fibers and of the mineral wool products produced from them.

In accordance with claim 6 it is proposed to produce the first molten material e.g. from a soft glass and the second molten material e.g. from a hard glass. Thereby the advantages inherent in these quite different glass types may be combined effectively. The resulting product consequently exhibits good corrosion resistance and mechanical strength upon corresponding choice of the hard glass and good flexibility and thermal properties upon corresponding choice of the soft glass.

In accordance with claim 7 it is provided to select or harmonise the first and second molten materials such as to have similar, preferably approximately identical viscosities at a predetermined temperature or at the temperature prevailing upon fiberisation. The two molten materials thus will present very similar mechanical properties, for example a conforming flow behavior while passing through the openings owing to their similar or approximately identical viscosities at the temperature prevailing during fiberisation, which favors their conjoint fiberisation. Thereby optimum combination of the two molten materials in the range of their common points of contact is ensured during fiberisation.

The monocomposition fibers, bicomponent fibers or composite fibers are re-heated in accordance with claim 8, causing at least those portions made up of the molten material having the lower melting point to be softened again, resulting in additional points of contact between the fibers constituting the mineral wool material following solidification. Softening of the fiber portions made up of the softer molten material is accompanied by a relative movement of the fibers towards other fibers which thereby enter into contact in the range of their points of intersection. Following their subsequent solidification, an additional number of connecting points among the fibers will thus have been obtained. By means of such additional processes furthering mutual adhesion of fibers, improved cross-connection between the fibers inside the final product can advantageously be achieved. In a given case, introduction of binding agent between the fibers may even be omitted entirely as the required coherence of the fiber structure can as well be ensured by the connections thus produced. By softening the softer portions of the composite fibers or bicomponent fibers or of the monocomposition fibers produced from the softer glass, an additional shrinking effect may furthermore be obtained which in turn results in improved homogeneity of fiber distribution inside the final product. Mineral wool products produced in this manner are for example well suited for filters.

In device terms, the above described problem is solved by the characterising features of claim 9.

Particularly good implementation of the above discussed method is possible by means of the device according to the invention.

One advantage of this device resides in the fact that at least part of the orifices for the one molten material are arranged at a sufficiently great distance from the orifices for the other molten material such that pure fibers made up of the one molten material can be produced side by side with pure fibers made up of the other molten material. As a result, the construction of such spinners is facilitated substantially thanks to the simpler geometry of the orifices in comparison with the known spinners for producing bicomponent fibers. In addition, the use of existing spinners previously used for centrifuging fibers from a single molten material is imaginable at least to the extent that the spinner only needs to be supplemented on the inner side of the peripheral wall with compartments arranged in sections for separately feeding - or separately receiving - a respective molten material to at least one associated orifice. This results in reduced costs for producing such spinners.

The complexity of the spinner may furthermore be reduced advantageously inasmuch as the different molten materials can be supplied separately and centrifuged separately. The constructional measures to be taken on the inside of the spinner are thus confined to channelling each molten material by itself, which may thus be optimised separately. The problems in terms of flow mechanics occurring in the area of the common orifice in known bicomponent fiber spinners do not occur in the device of the invention.

If, in accordance with claim 10, all or part of the orifices in the peripheral wall for spinning off the first molten material are shifted toward the area of neighboring orifices for spinning off the second molten material such as to have a sufficient distance for producing pure single fibers or monocomposition fibers when the molten materials emerge, however in sufficiently close proximity such that these two monocomposition fibers may form a plurality of points of contact to combine with each other at a distance from the spinner during attenuation, then the production of compound fibers or composite fibers is possible. Owing to their different properties, such as e.g. different viscosities, melting points or elasticity modules of the different molten materials, these materials also exhibit different emanating and attenuation behaviors. As a consequence, the trajectories of two different molten materials originating from neighboring orifices develop into slightly different configurations, and suitable selection of the distance between orifices creates the possibility of such above mentioned fibers moving in a common imaginary range of trajectories. Every time the two fibers contact each other as a result of their movement, they get into surface contact and thereby produce a point of junction. Following solidification this results in the above mentioned compound fiber constituted of at least two single pure fibers and having a plurality of points of contact. This compound fiber is curled, with the development of its radius of curvature being variable along its length and possibly comprising several reversals of the turning direction.

If, in accordance with claim 11, at least part of these orifices for the molten material and adjacent neighboring orifices for the other molten material are arranged in sufficiently close proximity to have a common outlet or open into a common outlet, respectively, bicomponent fibers constituted of layers of both molten materials can also be produced by the device of the invention.

The device of the invention, in accordance with claim 12, can include orifices having different diameters. Producing fibers having different diameters is thereby possible. This moreover opens up the advantage of specifically optimising individual properties of the fibers.

If, in accordance with claim 13, a compartment for receiving one of the molten materials is associated with a plurality of orifices, preferably arranged in equidistant juxtaposition, then e.g. the throughput of one molten material and thus the quantity of fibers produced from this molten material can be increased substantially. Depending on the choice of the number of orifices per associated compartment, and correspondingly depending on the choice of orifices of adjacent compartments in their boundary region or adjacent orifices having a common outlet, respectively, any imaginable combination or any desired mixing ratio of pure fibers, composite fibers or bicomponent fibers, respectively, is advantageously possible. The productivity of this device can furthermore be increased as a result. This is particularly true if, in accordance with claim 14, exclusively orifices for producing composite fibers and/or orifices for producing bicomponent fibers are arranged in the boundary area between two compartments, whereby these boundary areas are fully made use of for producing fibers made up of the components of both molten materials.

The arrangement of the different types of orifices, in accordance with claim 15, in cyclically repeated juxtaposition along the peripheral wall enables in a particularly advantageous manner the use of CNC-controlled machines for producing the spinner or device, respectively.

By the above described method of the invention, e.g. by use of the device of the invention, fibers can be produced from different molten materials having different physical properties such as for example different coefficients of thermal expansion, different melting points, different viscosities, different tensile strengths or different elasticity modules. In the context of the present invention, 'molten mineral materials' are meant to signify any fiberisable vitreous materials from the known traditional glasses through basalts and slags to rock melts. The invention can furthermore be applied to any fiberisable thermoplastic materials and thermoplastic fibers such as e.g. polymer materials as well as polyester or polypropylene fibers.

The obtained mineral wool product of the invention, in accordance with claim 16, comprises pure fibers of the material of the respective molten materials. The specific advantages of several different pure fibers may thus be combined. Properties of mineral wool products can thus be generated which otherwise might only be attained imperfectly e.g. by means of layer combination of two products or by combination of several products.

In accordance with claim 17, the mineral wool product of the invention also includes composite fibers made up of monocomposition fibers from both molten materials. The mineral wool product can therefore also be given the advantageous properties by composite fibers.

The advantages of the bicomponent fibers can furthermore also be imparted to this mineral wool product if, in accordance with claim 18, the mineral wool product of the invention also includes bicomponent fibers made up of layers of both molten materials.

Specific properties particularly of the composite fibers can be made use of if, in accordance with claim 19, the mineral wool product is exclusively produced of composite fibers; under practical circumstances, however, it may be assumed that a small proportion of pure fibers cannot be avoided entirely in case local flow phenomena prevent single pure fibers from combining with each other, or if single fiber portions subsequently leave the compound.

The invention is explained in more detail in the following description of specific embodiments by making reference to the drawing, wherein:
- **Fig. 1**: is a schematically simplified sectional view of a peripheral wall of a spinner known from the prior art;
- **Fig. 2**: is a schematically simplified sectional view of a peripheral wall of a spinner of a device according to the invention;
- **Fig. 3**: is another schematically simplified sectional view of a peripheral wall of an embodiment of the device according to the invention shown in Fig. 2; and
- **Fig. 4**: is a third schematically simplified sectional view of the peripheral wall of another embodiment of the device according to the invention shown in Figs. 2 and 3.

The spinner 2 known from the prior art comprises in its peripheral wall 4 a multiplicity of orifices 6 and 8. Through these orifices 6 and 8, molten mineral materials 10 and 12 supplied to the spinner 2 are centrifuged. To this end, compartments 16 and 18 arranged in sections for separately supplying - or separately receiving - a respective molten material 10 or 12 are provided on the inside 14 of the peripheral wall 4 of spinner 2. Pairs of orifices 6 or 8 are associated with a respective compartment 16 or 18 in each imaginary circular plane. The orifices 6 and 8 of two adjacent compartments 16 and 18 extend toward each other at an angle α to form a "V" or "Y"-shaped configuration, with the two orifices 6 and 8 or passages 6 and 8 converging into a common orifice in the external area of the peripheral wall 4. As a result of the "Y" or "V" configuration of orifices 6 and 8, the molten material upon emerging from compartments 16 and 18 and upon emerging from the orifices forcibly changes directions several times, resulting in intense wear of the peripheral wall 4 due to abrasive corrosion. Such a geometry of orifices moreover has the drawback that due to the different molten material compositions and thus different viscosities and liquidus temperatures, a desired final composition of the produced fiber comprising specific proportions of both molten materials is not predictable.

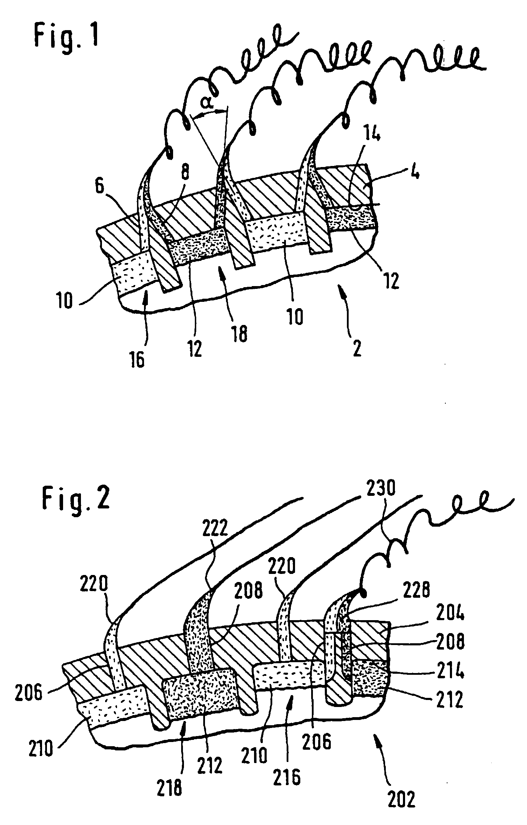

In comparison, Fig. 2 schows a schematically simplified sectional view of a peripheral wall 204 of a spinner 2 of the device according to the invention. Within the peripheral wall 204, compartments 216 and 218 for separately feeding - or separately receiving - a respective molten material 210 or 212 to at least one associated orifice 206 or 208 are arranged. Herein at least part of the orifices 206 for the molten material 210 and adjacent neighboring orifices 208 for the other molten material 212 are at a sufficiently great distance from each other that pure fibers 220 made up of the one molten material 210 can be produced side by side with pure fibers 222 made up of the other molten material 212. At least another part of the orifices 206 for the one molten material 210 and adjacent neighboring orifices 208 for the other molten material 212 are arranged in sufficiently close proximity for these two orifices 206 and 208 to open into a common outlet 228 located in the external area of the peripheral wall 204, such that bicomponent fibers 230 made up of layers of both molten materials 210 and 212 can be produced. It can also be seen in Fig. 2 that the orifices 206 and 208 may have different diameters if necessary.

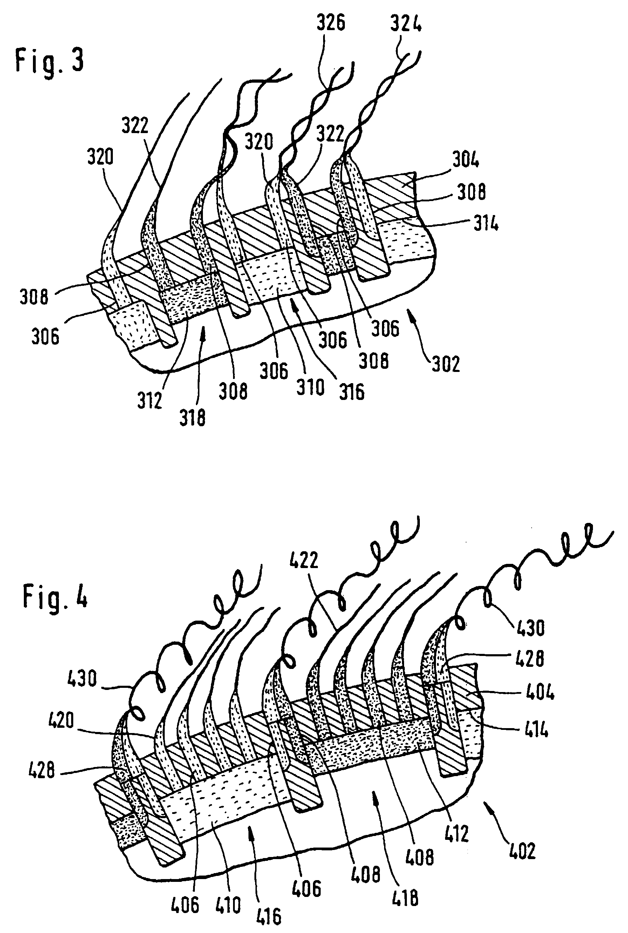

Fig. 3 shows in another schematically simplified sectional view a portion of the peripheral wall 304 comprising orifices 306 and 308 located therein. At least part of the orifices 306 for the one molten material 310 are arranged at a sufficient distance from adjacent neighboring orifices 308 for the other molten material 312, however in close enough proximity thereof to produce composite fibers 324 from two monocomposition fibers 320 and 322 which combine with each other through contact at a plurality of points of contact 326. The two different, mono compositon fibers 320 and 322 emerge from the peripheral wall 304 through the respective orifices 306 and 308 and are moved away from the spinner 302 on different trajectories by the attenuating effect (not shown here) of a gas flow as a result of different physical properties of the molten materials 310 and 312 constituting them. During this attenuating movement, the two monocomposition fibers 320 and 322 form multiple junctions by contact, whereby a plurality of points of contact 326 and thus the compound fiber 324 can be produced. As soon as the compound fiber 324 hardens owing to cooling, it begins to curl as a result of the different coefficients of thermal expansion and exhibits a helical configuration having varying radii of curvature and multiple reversals of its turning direction.

Another embodiment of the device according to the invention is represented in the schematic sectional view of the peripheral wall 404 of Fig. 4. Here a plurality of orifices 406 and 408 preferably arranged in equidistant juxtaposition are associated with a respective compartment 416 or 418 for receiving a respective one of molten materials 410 and 412. Orifices 406 and 408 for producing composite fibers 324 (not shown) and/or orifices for producing bicomponent fibers 430 are arranged in the boundary area between two compartments 416 and 418. For the purpose of producing the bicomponent fibers 430, the orifices 406 for the one molten material 410 adjacent to neighboring orifices 408 for the other molten material 412 in this case also open into a common outlet 428 in sufficient proximity of each other such that the bicomponent fibers 430 made up of layers of both molten materials 410 and 412 can be produced.

In another embodiment not shown here, the different types of orifices for pure fibers 220, 320, 420 and 222, 322, 422, for composite fibers 324, and for bicomponent fibers 230, 430 are arranged in cyclically repeated juxtaposition along the peripheral wall 204, 304, 404, preferably on common circle planes.

In order to produce mineral fibers having high corrosion resistance and good flexibility, e.g. a soft glass can be used as the first molten material. Besides good flexibility for the fiber, this offers further advantages such as e.g. reduced spinner wear. As the second molten material, a hard glass such as e.g. rock melts or basalts may be utilised. These hard glasses impart good resistance against external chemical and thermal influences to the fiber.

Fiberising conditions can be optimised largely separately for both molten materials, whereby optimising the devices against wear is possible. Inasmuch as, in contrast to the device known from the prior art, particularly a complex geometry of passages and orifices having a "V" or "Y"-shaped configuration is avoided, easy adaptation of the orifices to the different viscosities of the molten materials is possible. Wear may additionally be reduced as branches or bends, which might be eroded by the molten material as a result of corrosion, do not occur in flow channelling. Hereby a cross-section of orifices remaining constant over the entire service life of the device is furthermore guaranteed.

The orifices in the peripheral wall of the spinner can be produced by known drilling techniques, such as e.g. mechanical drilling by means of machining tools, laser drilling, electron beam drilling, or by electric discharge techniques. The orifices thus obtained may have circular cross-sections, however other orifice cross-sections such as e.g. elongate ones, are also imaginable.

## Claims

1. Method for producing mineral wool products of mineral fibers by using a spinner (202; 302; 402) having a multiplicity of orifices (206; 306; 406 bzw. 208; 308; 408) provided in the peripheral wall (204; 304; 404) thereof, through which at least two molten mineral materials (210; 310; 410 and 212; 312; 412) supplied to said spinner (202; 302; 402) are centrifuged,
**characterised in that**
each one of said at least two molten mineral materials (210; 310; 410 and 212; 312; 412) is at least partly centrifuged through respective orifices (206; 306; 406 and 208; 308; 408) which are separate and each assigned to one of said molten materials in order to produce pure or monocomposition fibers (220; 320; 420 and 222; 322; 422) from both molten materials (210; 310; 410 and 212; 312; 412).

2. Method, preferably in accordance with claim 1, for producing mineral wool products of mineral fibers by using a spinner (202; 302; 402) having a multiplicity of orifices (206; 306; 406 and 208; 308; 408) provided in the peripheral wall (204; 304; 404) thereof, through which at least two molten mineral materials (210; 310; 410 and 212; 312; 412) supplied to said spinner (202; 302; 402) are centrifuged,
**characterised in that**
each one of said two molten mineral materials (210; 310; 410 and 212; 312; 412) is at least partly centrifuged through orifices (206; 306; 406 and 208; 308; 408) which are separate and each assigned to a respective one of said molten materials,
with orifices (206; 306; 406) for a first one (210; 310; 410) of said molten materials being arranged in sufficiently close proximity of orifices (208; 308; 408) for a second one (212; 312; 412) of said molten materials that initially pure fibers (220; 320; 420 and 222; 322; 422) made up of both molten materials (210; 310; 410 and 212; 312; 412) are produced upon emerging from said orifices, which then combine during attenuation by contact at a plurality of points of contact (326) whereby composite fibers (324) consisting of both molten materials (210; 310; 410 and 212; 312; 412) are produced from monocomposition fibers (220; 320; 420 and 222; 322; 422).

3. Method in accordance with claim 1 or 2, characterised in that said two molten materials (210; 310; 410 and 212; 312; 412) are at least partly guided through initially separate orifices (206; 306; 406 and 208; 308; 408) or a common orifice or outlet (228; 428), respectively, such as to enter into surface contact with each other, and are then jointly centrifuged and attenuated to thereby produce bicomponent fibers (230; 430) made up of layers of both molten materials (210; 310; 410 and 212; 312; 412).

4. Method according to any one of claims 1 to 3, characterised in that pure fibers (220; 320; 420 and 222; 322; 422) made up of both molten materials, composite fibers (324) constituted by monocomposition fibers (220; 320; 420 and 222; 322; 422) made up of both molten materials (210; 310; 410 and 212; 312; 412) or bicomponent fibers (230; 430) made up of layers of both molten materials (210; 310; 410 and 212; 312; 412) are produced in predetermined portions of the peripheral wall of said spinner (202; 302; 402).

5. Method according to any one of claims 1 to 4, characterised in that fibers (220; 320; 420; 222; 322; 422; 324; 230; 430) having different diameters are produced.

6. Method according to any one of claims 1 to 5, characterised in that said first molten material (210; 310; 410) is produced e.g. of a soft glass, and said second molten material (212; 312; 412) is produced e.g. of a hard glass.

7. Method according to any one of claims 1 to 6, characterised in that said first molten material (210; 310; 410) and said second molten material (212; 312; 412) are selected such as to have similar, preferably approximately identical viscosities at a predetermined temperature upon fiberisation.

8. Method according to any one of claims 1 to 7, characterised in that said monocomposition fibers, composite fibers or bi-component fibers produced from both molten materials (210; 310; 410; 212; 312; 412) are again heated whereby at least those portions constituted of the one molten material having a lower melting point are re-softened to form additional points of contact between the fibers constituting said mineral wool material remaining after subsequent solidification.

9. Device for fiberising molten mineral materials (210; 310; 410 and 212; 312; 412) to produce mineral fiber products by means of a spinner (202; 302; 402) having a multiplicity of orifices (206; 306; 406 and 208; 308; 408) provided in the peripheral wall (204; 304; 404) thereof in order to have molten mineral materials (210; 310; 410 and 212; 312; 412) supplied to said spinner (202; 302; 402) emerge through these orifices (206; 306; 406 and 208; 308; 408) to centrifuge them, said spinner (202; 302; 402) comprising compartments (216; 316; 416 and 218; 318; 418) arranged in sections on the inside (214; 314; 414) of its peripheral wall (204; 304; 404) for separately supplying - or separately receiving, respectively - a respective one of said molten materials to at least one associated orifice,
**characterised in that**
at least part of said orifices (206; 306; 406) for said one molten material and orifices (208; 308; 408) for said other molten material (212; 312; 412) are located at a sufficient distance from each other that pure fibers or monocomposition fibers (220; 320; 420), respectively, made up of said one molten material (210; 310; 410) may be produced side by side with pure fibers or monocomposition fibers (222; 322; 422), respectively, made up of said other molten material (212; 312; 412).

10. Device, preferably in accordance with claim 9, for fiberising molten mineral materials (210; 310; 410 and 212; 312; 412) to produce mineral fiber products by means of a spinner (202; 302; 402) having a multiplicity of orifices (206; 306; 406 and 208; 308; 408) provided in the peripheral wall (204; 304; 404) thereof in order to have molten mineral materials (210; 310; 410 and 212; 312; 412) supplied to said spinner (202; 302; 402) emerge through these orifices (206; 306; 406 and 208; 308; 408) to centrifuge them, said spinner (202; 302; 402) comprising compartments (216; 316; 416 and 218; 318; 418) arranged in sections on the inside (214; 314; 414) of its peripheral wall (204; 304; 404) for separately supplying - or separately receiving, respectively - a respective one of said molten materials to at least one associated orifice,
**characterised in that**
at least part of said orifices (206; 306; 406) for said one molten material (210; 310; 410) and adjacent neighboring orifices (208; 308; 408) for said other molten material (212; 312; 412) are located at a sufficient distance from each other, however in sufficiently close juxtaposition for the two respective different, pure or monocomposition fibers (220; 320; 420 and 222; 322; 422) thus produced from said two different different molten materials (210; 310; 410 and 212; 312; 412) to contact each other when said molten materials (210; 310; 410 and 212; 312; 412) emerge from respective orifices (206; 306; 406 and 208; 308; 408) and thereby form composite fibers (324) made up of two monocomposition fibers (220; 320; 420 and 222; 322; 422) correspondingly combined with each other by contact at a plurality of points of contact (326).

11. Device in accordance with any one of claims 9 or 10, characterised in that at least part of said orifices (206; 306; 406) for said one molten material (210; 310; 410) and adjacent neighboring orifices (208; 308; 408) for said other molten material (212; 312; 412) are in sufficiently close juxtaposition to have a common outlet (28) or to open into a common outlet (228; 428), respectively, for producing bicomponent fibers (230; 430) made up of laterally contacting layers of both molten materials.

12. Device in accordance with any one of claims 9 to 11 characterised in that said orifices (206; 306; 406; 208; 308; 408; 228; 428) have different diameters.

13. Device in accordance with any one of claims 9 to 12, characterised in that a plurality of orifices, preferably arranged in equidistant juxtaposition, are associated with one compartment (216; 316; 416 or 218; 318; 418) for receiving a respective one of said molten materials (210; 310; 410 and 212; 312; 412).

14. Device in accordance with claim 13, characterised in that only orifices (206; 306; 406 and 208; 308; 408) for producing composite fibers (324) and/or orifices (206; 306; 406 and 208; 308; 408) for producing bicomponent fibers (230; 430) are arranged in the boundary area between two compartments (216; 316; 416 and 218; 318; 418).

15. Device in accordance with any one of claims 9 to 14, characterised in that the various types of orifices are arranged in cyclically repeated juxtaposition along said peripheral wall (204; 304; 404).

16. Mineral wool product produced by the method according to any one of claims 1 to 8 or by use of the device according to any one of claims 9 to 15, which comprises pure fibers or monocomposition fibers (220; 320; 420 and 222; 322; 422) made up of the respective molten materials.

17. Mineral wool product in accordance with claim 16, characterised by furthermore comprising composite fibers (324) which are constituted by monocomposition fibers (220; 320; 420 and 222; 322; 422) each made up of a respective one of said two molten materials (210; 310; 410 and 212; 312; 412) and combined with each other at a plurality of points of contact (326).

18. Mineral wool product in accordance with claim 16 or 17, characterised by furthermore comprising bicomponent fibers (230; 430) made up of laterally contacting layers of both molten materials (210; 310; 410 and 212; 312; 412).

19. Mineral wool product produced by the method in accordance with any one of claims 2 to 8 or by use of the device according to any one of claims 10 to 15, which comprises composite fibers (324).
